# EUROPÄISCHE PATENTSCHRIFT

(11) **EP 0 976 642 B1**
(45) Veröffentlichungstag und Bekanntmachung des Hinweises auf die Patenterteilung: **27.11.2002**
(21) Anmeldenummer: 99113610.2
(22) Anmeldetag: 12.07.1999
(51) Int. Cl.: B62D 1/19

(54) **Lenksäulenanordnung für ein Kraftfahrzeug**
Steering column arrangement for a motor vehicle
Colonne de direction d'un véhicule automobile

(30) Priorität: 29.07.1998 DE 19834124
(43) Veröffentlichungstag der Anmeldung: 02.02.2000
(73) Patentinhaber: Volkswagen Aktiengesellschaft, 38436 Wolfsburg (DE)
(72) Erfinder: Friedewald, Klaus, Dr., 38104 Braunschweig (DE); Klement, Joachim, 38116 Braunschweig (DE)

(56) Entgegenhaltungen:
- DE-A- 4 404 375
- DE-C- 3 241 839

## Beschreibung

Die Erfindung betrifft eine Lenksäulenanordnung für ein Kraftfahrzeug mit einem Lenkrad, einer teleskopierbaren Lenkspindel und einem aus einem unteren und oberen Teilmantelrohr gebildeten, teleskopierbaren Mantelrohr, wobei das Lenkrad über die Lenkspindel mit einem Lenkgetriebe verbunden und die Lenkspindel in dem Mantelrohr drehbar gelagert ist, wobei das untere Teilmantelrohr mit Hilfe eines unteren Lenksäulenlagers an einem sich bei einer Frontalkollision in den Fahrgastraum hineinverlagernden ersten Bauteil angeordnet ist und das obere Teilmantelrohr mit Hilfe eines oberen Lenksäulenlagers an einem bei einer Frontalkollision seine räumliche Lage im wesentlichen beibehaltenden zweiten Bauteil angeordnet ist, wobei eine zwischen dem zweiten Bauteil und dem oberen Teilmantelrohr wirkende und bei einer Frontalkollision aktivierbare Entriegelungsvorrichtung und ein bei einer Frontalkollision bewegbares Keilglied zur Vermeidung und/oder Verringerung einer Aufwärtsbewegung des Lenkrades vorgesehen ist.

Im Stand der Technik, von dem die Erfindung ausgeht (DE-A-44 04 375), ist eine Lenksäulenanordnung bekannt, bei der das eine Keilfläche aufweisende und bewegbar angeordnete Keilglied gewährleistet, daß bei einer Frontalkollision das Lenkrad keine Aufwärtsbewegung ausführt. Bei einer Frontalkollision wird das Mantelrohr teleskopiert, nämlich das untere Teilmantelrohr in Richtung auf das obere Teilmantelrohr geschoben bzw. in das obere Teilmantelrohr eingeschoben. Aufgrund der bei einer Frontalkollision aktivierten Entriegelungsvorrichtung wird das obere Teilmantelrohr von dem zweiten Bauteil im wesentlichen "entkoppelt", d.h. der zwischen zweitem Bauteil und oberem Teilmantelrohr wirkende Kraftschluß wird aufgehoben (Entriegelung). Ohne ein nunmehr bei einer Frontalkollision wirkendes Keilglied würde das obere Teilmantelrohr, d.h. der das Lenkrad aufweisende obere Bereich des oberen Teilmantelrohres weiter aufwärts verschwenkt werden, wenn vom unteren Teilmantelrohr über das erste Bauteil die entsprechende bei einer Frontalkollision entstehende Kraft ausgeübt wird. Aufgrund der entsprechenden Anordnung und Ausbildung des Keilgliedes wird nun gewährleistet, daß diese Aufwärtsbewegung vermieden wird. Das Keilglied ist hier so angeordnet, daß es mit der Entriegelungsvorrichtung bzw. mit dem oberen Lenksäulenlager bei einer Frontalkollision derartig zusammenwirkt, daß die von der Keilfläche ausgehende Kraft so wirkt, daß der obere das Lenkrad aufweisende Bereich des oberen Teilmantelrohres nach unten gedrückt wird. Anders ausgedrückt, mit Hilfe des Keilgliedes wird eine Verschwenkbewegung nach unten realisiert, so daß bei einer Frontalkollision die übliche Aufwärtsbewegung "kompensiert" werden kann.

Die bekannte Lenksäulenanordnung, von der die Erfindung ausgeht, ist nicht optimal ausgebildet. Einerseits ist das Keilglied so angeordnet, daß es zu Beginn der Frontalkollision nicht in seiner wirksamen Startposition "liegt", d.h. die Keilfläche des Keilgliedes nicht schon in der Art und Weise anliegt, daß bei einer entsprechenden Verschiebung des Keilgliedes diese direkt wirksam werden kann. Andererseits ist in einer beschriebenen Ausführungsform das Keilglied so angeordnet, daß dieses zwar durch das erste Bauteil entsprechend verschoben wird, aber zwischen dem ersten Bauteil und dem entsprechenden Endbereich des Keilgliedes ein "Leerlaufweg" vorgesehen ist, d.h. das erste Bauteil bei einer Frontalkollision sich zwar zunächst verschieben kann, hierdurch aber keine Verschiebung des Keilgliedes erfolgt, sondern erst eine Verschiebung des Keilgliedes erfolgt, wenn das erste Bauteil nach Durchlauf des Leerlaufweges auf den Endbereich des Keilgliedes trifft. Bei der im Stand der Technik bekannten Lenksäulenanordnung wird der zwischen dem ersten Bauteil und dem Keilglied existierende "Leerlaufweg" zur Aktivierung der Entriegelungsvorrichtung genutzt. Anders ausgedrückt, während der Bewegung des ersten Bauteiles über den "Leerlaufweg", der auch als Entriegelungsweg bezeichenbar ist, wird die Entriegelungsvorrichtung aktiviert, mit deren Hilfe das obere Teilmantelrohr vom zweiten Bauteil "entkuppelt" wird. Nach der erfolgten "Entkupplung" trifft dann bei Beendigung des Entriegelungsweges das erste Bauteil auf das Keilglied, um dieses entsprechend zu verschieben, so daß die Aufwärtsbewegung des Lenkrades vermieden bzw. verringert wird. Bedingt dadurch, daß bereits bei Beginn der Frontalkollision, also dann, wenn der Entriegelungsweg noch nicht vollständig beendet worden ist, das untere Teilmantelrohr in das obere Teilmantelrohr hineingedrückt wird, kommt es bereits zu einer geringfügigen Verlagerung des oberen Teilmantelrohres. Weiterhin bedingt dadurch, daß das Keilglied noch nicht in seiner wirksamen Startposition positioniert ist, hat - nach Beendigung des Eniriegelungsweges - die Beaufschlagung des Keilgliedes durch das erste Bauteil die Folge, daß das Keilglied bzw. die Keilfläche des Keilgliedes nicht die ihm zugedachte optimale Wirkung ausführen kann, eben weil bei der Kraftbeaufschlagung die Keilfläche nicht in der Startposition entsprechend anliegt und eben weil das obere Teilmantelrohr bereits leicht verschoben bzw. verschwenkt worden ist. Im Ergebnis ist die Wirkung des Keilgliedes bei der im Stand der Technik bekannten Lenksäulenanordnung folglich nicht optimal.

Der Erfindung liegt daher die Aufgabe zugrunde, die bekannte Lenksäulenanordnung derart auszugestalten und weiterzubilden, daß die Wirkung des Keilgliedes erhöht und damit die Aufwärtsbewegung des Lenkrades bei einer Frontalkollision weiter verringert ist.

Die zuvor aufgezeigte Aufgabe ist nun dadurch gelöst, daß ein mit dem Keilglied zusammenwirkendes Deformationselement vorgesehen ist und das Deformationselement so angeordnet und ausgebildet ist, daß bei einer Frontalkollision das Keilglied während des Entriegelungsvorganges der aktivierten Entriegelungsvorrichtung bis spätestens zu dem Zeitpunkt der vollständigen Entriegelung des oberen Teilmantelrohres vom zweiten Bauteil in seine wirksame Startposition bewet wird. Durch die entsprechende Anordnung des Deformationselementes wird das Keilglied zu Beginn der Frontalkollision, also während der Zeit, in der die Entriegelungsvorrichtung aktiviert wird, mit Hilfe des Deformationselementes in seine wirksame Startposition bewegt, also in die Position, in der das Keilglied nach Beendigung des Entriegelungsvorganges bei einer weiteren, nachfolgenden Verschiebung direkt wirksam ist. Folglich kann die Keilflläche des Keilgliedes bei entsprechender Kraftbeaufschlagung des Keilgliedes nach vollständiger Entriegelung des oberen Teilmantelrohres vom zweiten Bauteil, da die Startposition des Keilgliedes zu diesem Zeitpunkt erreicht ist, ihre volle und damit optimale Wirkung entfalten. Durch die erfindungsgemäße Lenksäulenanordnung werden die oben beschriebenen Nachteile vermieden, da die Wirkung des Keilgliedes erhöht und damit eine mögliche Aufwärtsbewegung des Lenkrades bei einer Frontalkollision weiter verringert ist.

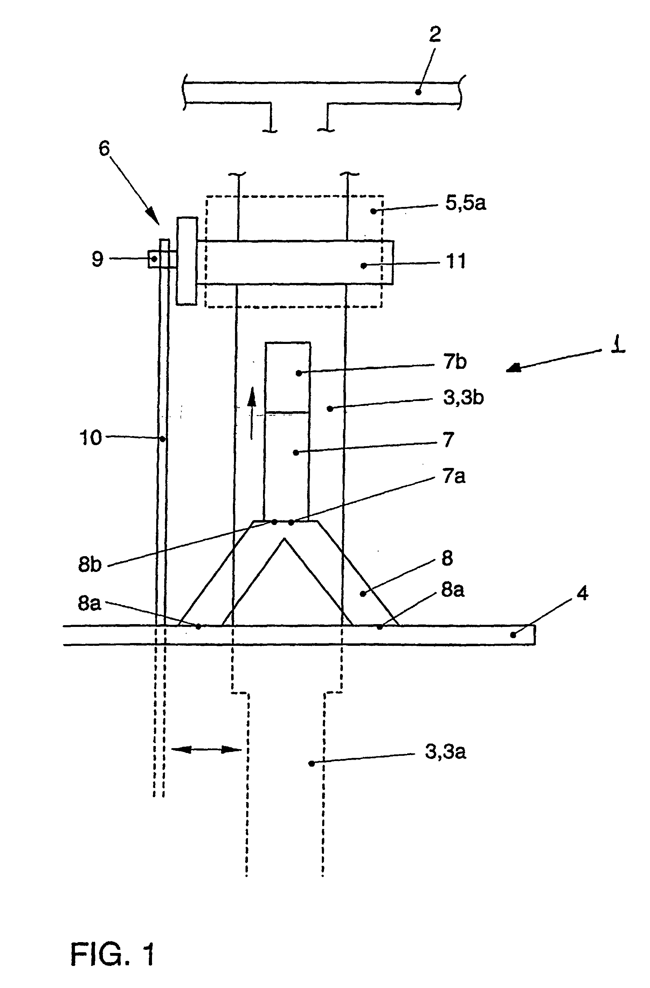

Es gibt nun eine Vielzahl von Möglichkeiten, die erfindungsgemäße Lenksäulenanordnung in vorteilhafter Weise auszugestalten und weiterzubilden. Hierfür darf an dieser Stelle auf die dem Patentanspruch 1 nachgeordneten Patentansprüche verwiesen werden. Im übrigen wird nun eine bevorzugte Ausführungsform der Erfindung anhand einer Zeichnung näher erläutert. In der Zeichnung zeigt
- Fig. 1: in schematischer Darstellung die erfindungsgemäße Lenksäulenanordnung von oben.

Die einzige Figur der Zeichnung, die Fig. 1, zeigt in schematischer Darstellung von oben eine Lenksäulenanordnung 1 für ein nicht näher dargestelltes Kraftfahrzeug. Die Lenksäulenanordnung 1 weist ein Lenkrad 2 auf. Das nur teilweise dargestellte Lenkrad 2 ist über eine nur angedeutete teleskopierbare Lenkspindel mit einem nicht dargestellten Lenkgetriebe verbunden. Die Lenkspindel ist in einem Mantelrohr 3 drehbar gelagert, wobei das Mantelrohr 3 teleskopierbar ausgeführt und aus einem unteren Teilmantelrohr 3a und einem oberen Teilmantelrohr 3b gebildet ist.

Das untere Teilmantelrohr 3a ist mit Hilfe eines nicht dargestellten unteren Lenksäulenlagers an einem sich bei einer Frontalkollision in den Fahrgastraum hinein verlagernden ersten Bauteil 4 angeordnet. Das obere Teilmantelrohr 3b ist mit Hilfe eines oberen, nicht näher bezeichneten Lenksäulenlagers an einem bei einer Frontalkollision seine räumliche Lage beibehaltenden zweiten Bauteil 5 angeordnet. Zwischen dem zweiten Bauteil 5 und dem oberen Teilmantelrohr 3b ist eine zwischen diesen beiden Elementen wirkende und bei einer Frontalkollision aktivierbare Entriegelungsvorrichtung 6 vorgesehen, die das zweite Bauteil 5 vom oberen Teilmantelrohr 3b bei einer Frontalkollision entsprechend "entkuppelt" bzw. entriegelt, d.h. dem zwischen dem zweiten Bauteil 5 und dem oberen Teilmantelrohr 3b existierenden Kraftschluß aufhebt.

Weiterhin ist ein bei einer Frontalkollision bewegbar angeordnetes Keilglied 7 zur Vermeidung und/oder Verringerung einer Aufwärtsbewegung des Lenkrades 2 vorgesehen. Das Keilglied 7 soll wie eingangs erläutert- bewirken, daß der obere Endbereich des oberen Teilmantelrohres 3b bei einer Frontalkollision nach unten verschwenkt wird und so die bei einer Frontalkollision entstehende Aufwärtsbewegung (d.h. Schwenkbewegung nach oben) dieses Endbereiches "kompensiert" wird.

Die eingangs beschriebenen Nachteile werden nun dadurch vermieden, insbesondere ist die Wirksamkeit des Keilgliedes 7 erhöht und damit die Aufwärtsbewegung des Lenkrades 2 dadurch verringert, daß ein mit dem Keilglied 7 zusammenwirkendes Deformationselement 8 vorgesehen ist und das Deformationselement 8 so angeordnet und ausgebildet ist, daß bei einer Frontalkollision das Keilglied 7 während des Entriegelungsvorganges der aktivierten Entriegelungsvorrichtung 6 bis spätestens zu dem Zeitpunkt der vollständigen Entriegelung des oberen Teilmantelrohres 3b vom zweiten Bauteil 5 in seine wirksame Startposition bewegbar ist. Aufgrund des erfindungsgemäß vorgesehen Deformationselementes 8 wird -während des Entriegelungsvorganges - das Keilglied 7 entsprechend verschoben, bis es seine wirksame Startposition erreicht, d.h. an den entsprechenden "Gegenstücken" zur Anlage kommt. Die Funktionsweise des Deformationselementes 8 wird im folgenden noch näher beschrieben werden.

Fig. 1 läßt erkennen, daß das erste Bauteil 4 hier als Spritzplatte ausgebildet ist. Es ist nicht explizit dargestellt, daß an dem als Spritzplatte ausgebildeten ersten Bauteil 4 auch das untere Teilmantelrohr 3a angeordnet ist, wozu das hier als Spritzplatte ausgebildete erste Bauteil 4 eine entsprechende Form, nämlich vzw. einen entsprechenden, hier nicht zu erkennenden Schenkel zur Aufnahme des unteren Lenksäulenlagers aufweist. Es ist denkbar, daß das Deformationselement 8, nicht - wie hier beschrieben - mit dem ersten Bauteil 4 zusammenwirkt, sondern mit einem anderen Bauteil, das sich ähnlich wie dann das erste Bauteil 4 bei einer Frontalkollision in den Fahrgastraum entsprechend hinein verlagert. Anders ausgedrückt, das Deformationselement 8 kann mit einem Bauteil zusammenwirken, das sich in den Fahrgastraum bei einer Frontalkollision um dem gleichen Weg hinein verlagert wie dann das erste Bauteil 4, an dem das untere Teilmantelrohr 3a angeordnet ist.

Das zweite Bauteil 5 ist als Querträger oder - wie hier gestrichelt angedeutet - als eine an einem Querträger angeordnete Konsole 5a ausgebildet. Gut zu erkennen ist, daß das Deformationselement 8 im wesentlichen V-förmig ausgebildet ist und die Enden 8a des V-förmig ausgebildeten Deformationselementes an dem ersten Bauteil 4, das hier als Spritzplatte ausgebildet ist, anliegen, und die Basis 8b des Deformationselementes 8 an einem Ende 7a des Keilgliedes 7 anliegt.

Die Entriegelungsvorrichtung 6 trägt dafür Sorge, daß das obere Teilmantelrohr 3b mit dem zweiten Bauteil 5 kraftschlüssig verbunden ist. Hierzu weist die Entriegelungsvorrichtung 6 eine Spannschraube 9 und einen mit der Spannschraube 9 zusammenwirkenden Entriegelungsschieber 10 auf. Die hier nur teilweise zu erkennende Spannschraube 9 ist in einem Lagerrohr 11 gelagert. Ein Ende des Entriegelungsschiebers 10 wirkt mit dem ersten Bauteil 4 oder mit dem unteren Teilmantelrohr 3a zusammen, was hier der Fall ist und durch den Doppelpfeil entsprechend angedeutet wird.

Das Keilglied 7 ist zum oberen Teilmantelrohr 3b bewegbar angeordnet, kann sich also relativ zum oberen Teilmantelrohr 3b entsprechend verschieben, was ebenfalls durch einen Pfeil angedeutet ist. In der wirksamen Startposition des Keilgliedes 7 liegt die vordere Keilfläche 7b des Keilgliedes 7 an dem Lagerrohr 11 der Entriegelungsvorrichtung 6 an. Dieser Fall ist in der Fig. 1 nicht dargestellt.

Bei einer Frontalkollision ist das Deformationselement 8 zumindest teilweise deformierbar. Mit Hilfe des Deformationselementes 8 ist zu Beginn einer Frontalkollision das Keilglied 7 in die wirksame Startposition, dies ist in Fig. 1 nach oben, verschiebbar. Da im allgemeinen die Startposition des Keilgliedes 7 erreicht wird, wenn noch ein Entriegelungsweg des Entriegelungsschiebers 10 verbleibt, beginnt sich das Deformationselement 8 zu verformen, so daß durch die entsprechende Deformierbarkeit des Deformationselementes 8 dieser noch verbleibende Entriegelungsweg aufgenommen wird, so daß das Keilglied 7 bis zum vollständigen Abschluß des Entriegelungsvorganges in seiner Startposition verbleibt.

Das Deformationselement 8 ist so ausgelegt bzw. dimensioniert, daß bei Erreichen der vollständigen Entriegelung keine weitere Deformation des Deformationselementes 8 während der Frontalkollision ermöglicht ist, so daß durch eine weitere während der Frontalkollison erfolgende Verschiebung das Keilglied 7 aus seiner Startposition in eine entsprechend wirksame Position verschiebbar ist, d.h. weiter nach oben verschoben werden kann. Die Keilfläche 7b des Keilgliedes 7 wirkt mit dem Lagerrohr 11 und die untere hier nicht zu erkennende Fläche des Keilgliedes 7 mit dem oberen Teilmantenrohr 3b so zusammen, daß eine Abwärtsbewegung des oberen Bereiches des Teilmantelrohres 3b ermöglicht ist, wodurch eine eventuelle Aufwärtsbewegung des Lenkrades 2 vermieden bzw. kompensiert wird.

## Patentansprüche

1. Lenksäulenanordnung (1) für ein Kraftfahrzeug mit einem Lenkrad (2), einer teleskopierbaren Lenkspindel und einem aus einem unteren und oberen Teilmantelrohr (3a, 3b) gebildeten, teleskopierbaren Mantelrohr (3), wobei das Lenkrad (2) über die Lenkspindel mit einem Lenkgetriebe verbunden und die Lenkspindel in dem Mantelrohr (3) drehbar gelagert ist, wobei das untere Teilmantelrohr (3a) mit Hilfe eines unteren Lenksäulenlagers an einem sich bei einer Frontalkollision in den Fahrgastraum hineinverlagernden ersten Bauteil (4) angeordnet ist und das obere Teilmantelrohr (3b) mit Hilfe eines oberen Lenksäulenlagers an einem bei einer Frontalkollision seine räumliche Lage im wesentlichen beibehaltenden zweiten Bauteil (5) angeordnet ist, wobei eine zwischen dem zweiten Bauteil (5) und dem oberen Teilmantelrohr (3b) wirkende und bei einer Frontalkollision aktivierbare Entriegelungsvorrichtung (6) und ein bei einer Frontalkollision bewegbares Keilglied (7) zur Vermeidung und/oder Verringerung einer Aufwärtsbewegung des Lenkrads (2) vorgesehen ist, **dadurch gekennzeichnet, daß** ein mit dem Keilglied (7) zusammenwirkendes Deformationselement (8) vorgesehen ist, wobei das Deformationselement (8) so angeordnet und ausgebildet ist, daß bei einer Frontalkollision das Keilglied (7) während des Entriegelungsvorganges der aktivierten Entriegelungsvorrichtung (6) bis spätestens zu dem Zeitpunkt der vollständigen Entriegelung des oberen Teilmantelrohres (3b) vom zweiten Bauteil (5) in seine wirksame Startposition bewet wird.

2. Lenksäulenanordnung nach dem vorhergehenden Anspruch, **dadurch gekennzeichnet, daß** das erste Bauteil (4) als Spritzplatte ausgebildet ist.

3. Lenksäulenanordnung nach einem der vorhergehenden Ansprüche, **dadurch gekennzeichnet, daß** das zweite Bauteil (5) als Querträger oder als eine an einem Querträger angeordnete Konsole (5a) ausgebildet ist.

4. Lenksäulenanordnung nach einem der vorhergehenden Ansprüche, **dadurch gekennzeichnet, daß** das Deformationselement (8) im wesentlichen V-förmig ausgebildet ist.

5. Lenksäulenanordnung nach Anspruch 4, **dadurch gekennzeichnet, daß** die Enden des V-förmig ausgebildeten Deformationselementes (8) an dem ersten Bauteil (4) und die Basis (8b) an einem Ende (7a) des Keilgliedes (7) anliegen.

6. Lenksäulenanordnung nach einem der vorhergehenden Ansprüche, **dadurch gekennzeichnet, daß** die Entriegelungsvorrichtung (6) eine Spannschraube (9) und einen mit der Spannschraube (9) zusammenwirkenden Entriegelungsschieber (10) aufweist.

7. Lenksäulenanordnung nach Anspruch 6, **dadurch gekennzeichnet, daß** die Spannschraube (9) in einem Lagerrohr (11) gelagert ist.

8. Lenksäulenanordnung nach Anspruch 6 oder 7, **dadurch gekennzeichnet, daß** ein Ende des Entriegelungsschiebers (10) mit dem ersten Bauteil (4) oder mit dem unteren Teilmantelrohr (3a) zusammenwirkt.

9. Lenksäulenanordnung nach einem der vorhergehenden Ansprüche, **dadurch gekennzeichnet, daß** das Keilglied (7) bewegbar zum oberen Teilmantelrohr (3b) angeordnet ist.

10. Lenksäulenanordnung nach einem der vorhergehenden Ansprüche 7 bis 9, **dadurch gekennzeichnet, daß** in der wirksamen Startposition des Keilgliedes (7) die vordere Keilfläche (7b) des Keilgliedes (7) an dem Lagerrohr (11) der Entriegelungsvorrichtung (6) anliegt.

11. Lenksäulenanordnung nach einem der vorhergehenden Ansprüche, **dadurch gekennzeichnet, daß** das Deformationselement (8) bei einer Frontalkollision zumindest teilweise deformierbar ist.

12. Lenksäulenanordnung nach einem der vorhergehenden Ansprüche, **dadurch gekennzeichnet, daß** zu Beginn einer Frontalkollision mit Hilfe des Deformationselementes (8) das Keilglied (7) in die wirksame Startposition verschiebbar ist und ein bei Erreichen der Startposition noch verbleibender Entriegelungsweg des Entriegelungsschiebers (10) durch die entsprechende Deformierbarkeit des Deformationselementes (8) kompensiert wird.

13. Lenksäulenanordnung nach einem der vorhergehenden Ansprüche, **dadurch gekennzeichnet, daß** das Deformationselement (8) so ausgelegt bzw. dimensioniert ist, daß bei Erreichen der vollständigen Entriegelung keine weitere Deformation des Deformationselementes (8) während der Frontalkollision ermöglicht ist, so daß durch eine weitere während der Frontalkollision erfolgende Verschiebung das Keilglied (7) aus seiner Startposition in eine entsprechend wirksame Position verschiebbar ist.

14. Lenksäulenanordnung nach Anspruch 10, **dadurch gekennzeichnet, daß** die Keilfläche (7b) des Keilgliedes (7) mit dem Lagerrohr (11) und die untere Fläche des Keilgliedes (7) mit dem oberen Teilmantelrohr (3b) so zusammenwirkt, daß eine Abwärtsbewegung des oberen Bereichs des Teilmantelrohres (3b) ermöglicht ist.

## Claims

1. Steering column arrangement (1) for a motor vehicle having a steering wheel (2), a telescopic steering spindle and a telescopic jacket tube (3) formed from a lower tube part (3a) and an upper tube part (3b), the steering wheel (2) being connected to a steering gear via the steering spindle, and the steering spindle being rotatably mounted in the jacket tube (3), the lower jacket tube part (3a) being arranged, using a lower steering column bearing, on a first component (4) which is displaced into the passenger compartment in the event of a frontal collision, and the upper jacket tube part (3b) being arranged, using an upper steering column bearing, on a second component (5) which essentially retains its spatial position in the event of a frontal collision, an unlocking device (6) which acts between the second component (5) and the upper jacket tube part (3b) and can be actuated in the event of frontal collision, and a wedge element (7) which can be moved in the event of a frontal collision in order to avoid and/or reduce an upward movement of the steering wheel (2) being provided, **characterized in that** a deformation element (8) which interacts with the wedge element (7) is provided, the deformation element (8) being arranged and formed in such a way that in the event of a frontal collision the wedge element (7) is moved into its effective starting position during the unlocking operation of the activated unlocking device (6) until, at the latest, the time when the upper jacket tube part (3b) is completely unlocked from the second component (5).

2. Steering column arrangement according to the preceding claim, **characterized in that** the first component (4) is embodied as an splash plate.

3. Steering column arrangement according to one of the preceding claims, **characterized in that** the second component (5) is embodied as a cross-member or as a bracket (5a) which is arranged on a cross-member.

4. Steering column arrangement according to one of the preceding claims, **characterized in that** the deformation element (8) is of essentially V-shaped construction.

5. Steering column arrangement according to Claim 4, **characterized in that** the ends of the deformation element (8) which is of V-shaped construction bear against the first component (4), and the base (8b) bears against one end (7a) of the wedge element (7).

6. Steering column arrangement according to one of the preceding claims, **characterized in that** the unlocking device (6) has a clamping screw (9) and an unlocking slide (10) which interacts with the clamping screw (9).

7. Steering column arrangement according to Claim 6, **characterized in that** the clamping screw (9) is mounted in a bearing tube (11).

8. Steering column arrangement according to Claim 6 or 7, **characterized in that** one end of the unlocking slide (10) interacts with the first component (4) or with the lower jacket tube part (3a).

9. Steering column arrangement according to one of the preceding claims, **characterized in that** the wedge element (7) is arranged so as to be moveable with respect to the upper jacket tube part (3b).

10. Steering column arrangement according to one of the preceding Claims 7 to 9, **characterized in that** in the effective starting position of the wedge element (7) the front wedge face (7b) of the wedge element (7) bears against the bearing tube (11) of the unlocking device (6).

11. Steering column arrangement according to one of the preceding claims, **characterized in that** the deformation element (8) is at least partially deformable in the event of frontal collision.

12. Steering column arrangement according to one of the preceding claims, **characterized in that** at the start of a frontal collision the wedge element (7) can be displaced into the effective starting position using the deformation element (8), and an unlocking path of the unlocking slide (10) which still remains when the starting position is reached is compensated by the respective deformability of the deformation element (8).

13. Steering column arrangement according to one of the preceding claims, **characterized in that** the deformation element (8) is configured and dimensioned in such a way that, when complete unlocking is achieved, no further deformation of the deformation element (8) during the frontal collision is permitted, so that a further displacement which takes place during the frontal collision can displace the wedge element (7) from its starting position into a correspondingly effective position.

14. Steering column arrangement according to Claim 10, **characterized in that** the wedge face (7b) of the wedge element (7) interacts with the bearing tube (11), and the lower face of the wedge element (7) interacts with the upper jacket tube part (3b), in such a way that a downward movement of the upper region of the jacket tube part (3b) is made possible.

## Revendications

1. Colonne de direction (1) pour un véhicule automobile avec un volant (2), un arbre de direction télescopique et une gaine tubulaire (3) télescopique, formée d'une gaine tubulaire partielle inférieure et supérieure (3a, 3b), dans laquelle le volant (2) est relié à un mécanisme de direction par l'arbre de direction et l'arbre de direction est supporté de façon rotative dans la gaine tubulaire (3), dans laquelle la partie inférieure de la gaine tubulaire (3a) est disposée à l'aide d'un palier inférieur de la colonne de direction sur une première pièce (4) se déplaçant vers l'intérieur de l'habitacle en cas de collision frontale et la partie supérieure de la gaine tubulaire (3b) est disposée à l'aide d'un palier supérieur de la colonne de direction sur une deuxième pièce (5) conservant sensiblement sa position spatiale en cas de collision frontale, dans laquelle il est prévu un dispositif de déverrouillage (6) agissant entre la deuxième pièce (5) et la partie supérieure de la gaine tubulaire (3b) et pouvant être activé en cas de collision frontale et un élément de cale (7) mobile en cas de collision frontale pour éviter et/ou réduire un mouvement du volant (2) vers le haut, **caractérisée en ce qu'**il est prévu un élément de déformation (8) coopérant avec l'élément de cale (7), l'élément de déformation (8) étant disposé et configuré de telle manière qu'en cas de collision frontale, l'élément de cale (7) soit déplacé dans sa position initiale active pendant l'opération de déverrouillage du dispositif de déverrouillage (6) activé jusqu'au plus tard le moment du déverrouillage complet de la partie supérieure de la gaine tubulaire (3b) de la deuxième pièce (5).

2. Colonne de direction suivant la revendication précédente, **caractérisée en ce que** la première pièce (4) est constituée par une plaque moulée par injection.

3. Colonne de direction suivant l'une quelconque des revendications précédentes, **caractérisée en ce que** la deuxième pièce (5) est constituée par une traverse ou par une console (5a) disposée sur une traverse.

4. Colonne de direction suivant l'une quelconque des revendications précédentes, **caractérisée en ce que** l'élément de déformation (8) est façonné sensiblement en forme de V.

5. Colonne de direction suivant la revendication 4, **caractérisée en ce que** les extrémités de l'élément de déformation (8) façonné en forme de V sont appliquées sur la première pièce (4) et la base (8b) sur une extrémité (7a) de l'élément de cale (7).

6. Colonne de direction suivant l'une quelconque des revendications précédentes, **caractérisée en ce que** le dispositif de déverrouillage (6) présente une vis de serrage (9) et un curseur de déverrouillage (10) coopérant avec la vis de serrage (9).

7. Colonne de direction suivant la revendication 6, **caractérisée en ce que** la vis de serrage (9) est supportée dans un tube de palier (11).

8. Colonne de direction suivant la revendication 6 ou 7, **caractérisée en ce qu'**une extrémité du curseur de déverrouillage (10) coopère avec la première pièce (4) ou avec la partie inférieure (3a) de la gaine tubulaire.

9. Colonne de direction suivant l'une quelconque des revendications précédentes, **caractérisée en ce que** l'élément de cale (7) est disposé de façon mobile vers la partie supérieure (3b) de la gaine tubulaire.

10. Colonne de direction suivant l'une quelconque des revendications précédentes 7 à 9, **caractérisée en ce que**, dans la position initiale active de l'élément de cale (7), la face de calage avant (7b) de l'élément de cale (7) est appliquée sur le tube de palier (11) du dispositif de déverrouillage (6).

11. Colonne de direction suivant l'une quelconque des revendications précédentes, **caractérisée en ce que** l'élément de déformation (8) est au moins partiellement déformable en cas de collision frontale.

12. Colonne de direction suivant l'une quelconque des revendications précédentes, **caractérisée en ce qu'**au début d'une collision frontale, l'élément de cale (7) peut coulisser dans la position initiale active à l'aide de l'élément de déformation (8) et une course de déverrouillage du curseur de déverrouillage (10) qui reste encore à parcourir lorsque la position initiale est atteinte, est compensée par la déformabilité correspondante de l'élément de déformation (8).

13. Colonne de direction suivant l'une quelconque des revendications précédentes, **caractérisée en ce que** l'élément de déformation (8) est conçu, respectivement dimensionné de telle manière que, lorsque le déverrouillage complet est atteint, aucune autre déformation de l'élément de déformation (8) ne soit possible pendant la collision frontale, de telle manière que, lors d'un glissement supplémentaire se produisant pendant la collision frontale, l'élément de cale (7) puisse glisser de sa position initiale dans une position active correspondante.

14. Colonne de direction suivant la revendication 10, **caractérisée en ce que** la face de calage (7b) de l'élément de cale (7) coopère avec le tube de palier (11) et la face inférieure de l'élément de cale (7) avec la partie supérieure (3b) de la gaine tubulaire, de telle manière qu'un mouvement descendant de la zone supérieure de la gaine tubulaire partielle (3b) soit possible.
